# EUROPEAN PATENT APPLICATION

(11) **EP 1 531 192 A1**
(43) Date of publication of application: **18.05.2005**
(21) Application number: 04256966.5
(22) Date of filing: 10.11.2004
(51) Int. Cl.: C23C 28/00, F01D 5/28

(54) **Thermal barrier coating having a heat radiation absorbing topcoat**

(30) Priority: 12.11.2003 US 712821
(71) Applicant: GENERAL ELECTRIC COMPANY, Schenectady, NY 12345 (US)
(72) Inventor: Stowell, William Randolph, Rising Sun Indiana 47040 (US); Skoog, Andrew Jay, West Chester Ohio 45069 (US); Ackerman, John Frederick, Laramie Wyoming 82070 (US); Nagaraj, Bangalore Aswatha, West Chester Ohio 45069 (US); Murphy, Jane Ann, Franklin Ohio 45005 (US); Ivkovick, Daniel Peter, Fairfield Ohio 45014 (US)
(74) Representative: Pedder, James Cuthbert

(57) **Abstract**

Coating systems suitable for protecting components exposed to high-temperature environments, such as the hot gas flow path through a gas turbine engine are described. A multilayer thermal barrier coating (TBC) system (10, 110) is characterized by a low coefficient of thermal conductivity and having a heat-absorbing topcoat (20, 120) comprised of the thermal decomposition product of at least one metallic element and at least one ceramic precursor binder component.

## Description

This invention relates to coating systems suitable for protecting components exposed to high-temperature environments, such as the hot gas flow path through a gas turbine engine. More particularly, this invention is directed to a multilayer thermal barrier coating (TBC) system characterized by a low coefficient of thermal conductivity and having a heat-absorbing topcoat.

The use of thermal barrier coatings (TBC) on components such as combustors, high pressure turbine (HPT) blades and vanes is increasing in commercial as well as military gas turbine engines. The thermal insulation of a TBC enables such components to survive higher operating temperatures, increases component durability, and improves engine reliability. TBC is typically a ceramic material deposited on an environmentally-protective bond coat to form what is termed a TBC system. Bond coat materials widely used in TBC systems include oxidation-resistant overlay coatings such as MCrAIX (where M is iron, cobalt and/or nickel, and X is yttrium or another rare earth element), pure oxidation resistant intermetallic compounds such as nickel aluminides, and oxidation-resistant diffusion coatings such as diffusion aluminides that contain aluminum intermetallics.

Ceramic materials and particularly binary yttria-stabilized zirconia (YSZ) are widely used as TBC materials because of their high temperature capability, low thermal conductivity, and relative ease of deposition such as by air plasma spraying (APS), flame spraying such as hyper-velocity oxy-fuel (HVOF), physical vapor deposition (PVD) and other known TBC application techniques. TBCs formed by these methods generally have a lower thermal conductivity than a dense ceramic of the same composition as a result of the presence of microstructural defects and pores at and between grain boundaries of the TBC microstructure.

TBC employed in the highest temperature regions of gas turbine engines are often deposited by electron beam physical vapor deposition (EBPVD), which yields a columnar, strain-tolerant grain structure that is able to expand and contract without causing damaging stresses that lead to spallation. Similar columnar microstructures can be produced using other atomic and molecular vapor processes, such as sputtering (e.g., high and low pressure, standard or collimated plume), ion plasma deposition, and all forms of melting and evaporation deposition processes (e.g., cathodic arc, laser melting, etc.).

Regardless of the method of application, in order for a TBC to remain effective throughout the planned life cycle of the component it protects, it is important that the TBC has and maintains a low thermal conductivity throughout the life of the component, including high temperature excursions. However, the thermal conductivities of TBC materials such as YSZ are known to increase over time when subjected to the operating environment of a gas turbine engine. As a result, TBCs for gas turbine engine components are often deposited to a greater thickness than would otherwise be necessary. Alternatively, internally cooled components such as blades and nozzles must be designed to have higher cooling flow. Both of these solutions are undesirable for reasons relating to cost, component life and engine efficiency.

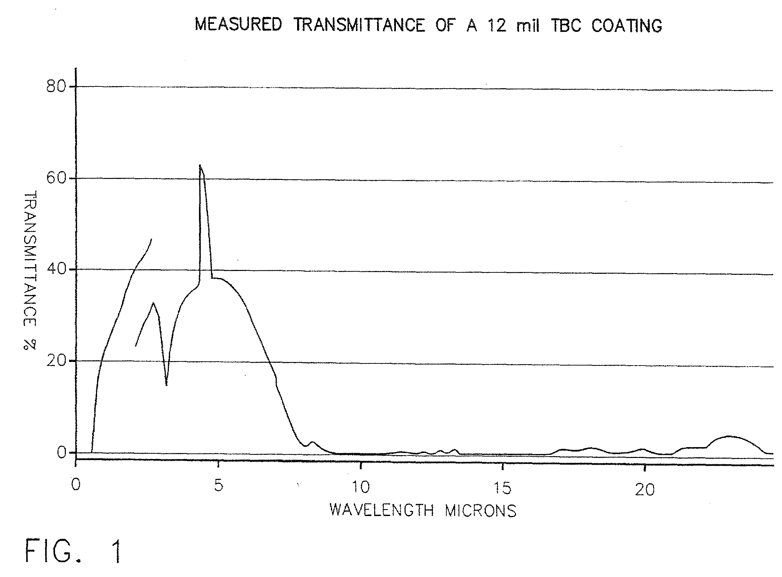

In view of the above, it can be appreciated that further improvements in TBC technology are desirable, particularly as TBCs are employed to thermally insulate components intended for more demanding engine designs. For example, known TBCs applied by APS methods at a thickness of about 12 mils exhibit heat radiation transparency of about 40% in the wavelength range of about 0.5 to about 5 microns. When exposed to a 4500R flame (R being the absolute scale for Fahrenheit temperature scale, wherein absolute zero is equal to 0 degrees R, and wherein absolute zero is equal to -459.6 degrees F.), approximately 40% of the heat energy from the flame in the 0.5 to 5 micron wavelength region is transmitted through the TBC to the substrate despite the low thermal conductivity of the TBC. This is illustrated by the FIG. 1, which represents a chart showing measured transmittance of a typical 12 mil thick TBC coating.

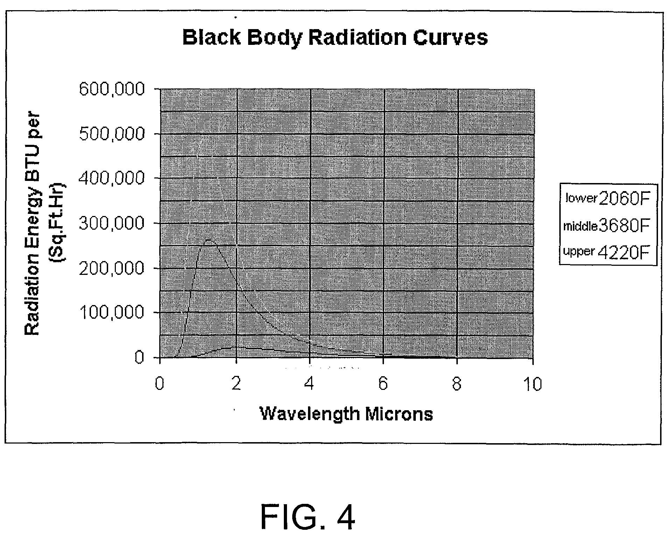

From the graph of Figure 4, one can see that a black body radiating at ~2060 °F produces much less energy than one radiating at 3680 °F or 4220 °F. Thus, if a surface is maintained at about 2060 °F by means of convection, it can only radiate a maximum energy of the lowest line on the attached graph. However, in gas turbine combustors, for example, gas temperatures are in the range of 3500 °F to 4000 °F and higher under maximum conditions, such as those used for take-off of a gas turbine powered aircraft. If a TBC on such a combustor is 40% transparent to heat in the .8 to 3 micron range, much more energy will be transmitted through it from a 3680 °F source than from a 2060 °F source. Hence, stopping heat radiation from a 3680 °F source in an absorbing media on the surface of the TBC and maintaining the surface temperature of the TBC by means of convective airflow would significantly reduce the energy that reaches the combustor's metal wall when compared to allowing the heat from combustion flames to directly impinge upon a semitransparent TBC.

Reducing the total thermal load of the substrate would reduce the part temperature, ceteris paribus. Such a reduction in thermal load can be accomplished by providing a TBC coating system with low thermal conductivity and having a heat-absorbing topcoat that reduces the heat transparency of the coating system, thereby reducing substrate component surface temperatures. Such a system also allows for reduction in TBC coating thickness while maintaining component surface temperature below a predetermined maximum component surface temperature. Reduced TBC thickness, especially in applications such as combustors that require relatively thick TBCs, would result in a significant cost reduction, as well as weight reduction benefits.

The present invention provides a novel thermal barrier coating (TBC) system having a heat-absorbing topcoat disposed over a TBC undercoat, the topcoat reducing the thermal transparency of the TBC system, resulting in low thermal conductivity and low thermal transparency of the TBC system to the underlying substrate. The TBC system may include a bond coat over the substrate, the bond coat providing the means by which a TBC undercoat is adhered to a component surface.

The TBC undercoat of this invention preferably comprises yttria-stabilized zirconia (YSZ). An exemplary YSZ is described in U.S. Pat. No. 6,586,115 "Yttria-stabilized zirconia with reduced thermal conductivity." However, other zirconia-based ceramic materials could also be used as the undercoat in accordance with this invention, such as zirconia fully stabilized by yttria, nonstabilized zirconia, or zirconia partially or fully stabilized by ceria, magnesia, scandia and/or other oxides.

The topcoat may comprise any material that exhibits heat adsorption in a desired spectrum at environmental operating temperatures, such as but not limited to environmental operating temperature of about 2500 to about 4500 degrees Fahrenheit. Exemplary topcoat materials may comprise alumina, hafnia, tantala, silica, platinum, nickel, iron, cobalt, chromium oxide, rare earth oxides, silicides, carbides, and any combination thereof.

Another advantage of the topcoat is that it can be applied by any of several methods. For example, it can be applied by spraying a liquid mixture of at least one metallic element and at least one a ceramic precursor binder, followed by heating to thermally convert the binder to form a heat-absorbing ceramic-metallic matrix coating containing the at least one metallic element. Alternatively, the topcoat can be applied over a TBC in the form of one or more thin film layers by methods such as, but not limited to, chemical vapor deposition ("CVD"), physical vapor deposition (PVD), plasma spray, and sputtering.

The invention will now be described in greater detail, by way of example, with reference to the drawings, in which:-
FIG. 1 represents a chart showing measured transmittance of a typical 12 mil thick TBC coating;
FIGS. 2 and 3 represent cross-sectional views of thermal barrier coating systems in accordance with the embodiments of the present invention, and
FIG. 4 is a graph to illustrate black body radiation.

The present invention is generally applicable to components subjected to high temperatures, and particularly to components such as the high pressure and low pressure turbine vanes (nozzles) and blades (buckets), shrouds, combustor liners and augmentor hardware of gas turbine engines. The invention provides a thermal barrier coating (TBC) system suitable for protecting those surfaces of a gas turbine engine component that are subjected to hot combustion gases. While the advantages of this invention will be described with reference to gas turbine engine components, the teachings of the invention are generally applicable to any component on which a TBC may be used to protect the component from a high temperature environment.

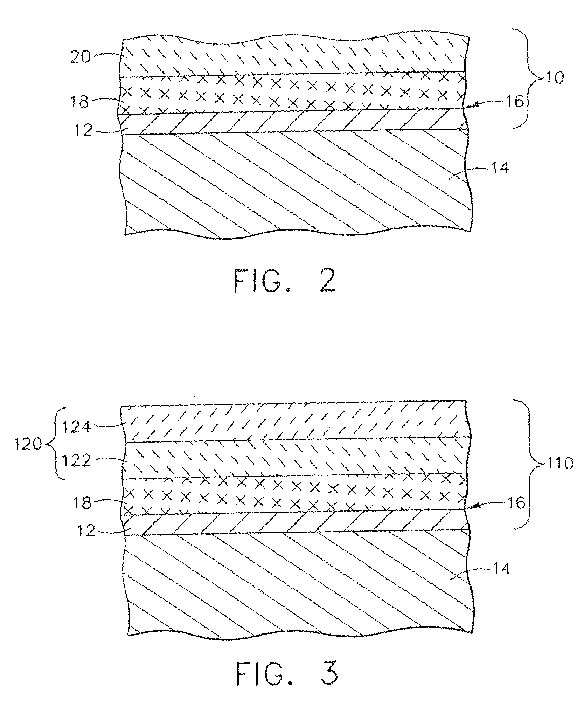

The coating systems in accordance with the preferred embodiments of this invention are represented in FIGS. 2 through 3. In each embodiment, the coating system 10, 110 is shown as including a metallic bond coat 12 that overlies the surface of a substrate 14, the latter of which is typically a superalloy and the base material of the component protected by the coating systems 10, 110. As is typical with TBC coating systems for gas turbine engine components, the bond coat 12 is preferably an aluminum-rich composition, such as an overlay coating of an MCrAIX alloy or a diffusion coating such as a diffusion aluminide or a diffusion platinum aluminide of a type known in the art. Aluminum-rich bond coats of this type develop an aluminum oxide (alumina) scale, which is grown by oxidation of the bond coat 12. The alumina scale 16 chemically bonds a TBC undercoating 18 to the bond coat 12 and substrate 14. Preferably although not necessarily, the bond coat layer 12 thickness is between about 2 to 10 mils and is uniform. The bond coat layer 12 may also be treated, e.g., by peening and/or heat treating, to densify any voids and to improve the structure of the bond coating. Generally, an alumina scale is formed on the bond coat by oxidation of the aluminum in the bond coat 12, or alternatively may be formed directly on an aluminum-containing substrate 14 without utilizing a bond coat. The thermal barrier coating layer or undercoat 18 comprised of a ceramic material such as YSZ, is then deposited on the bond coat 12, for example by electron beam physical vapor deposition (EB-PVD) or other known methods. The TBC undercoating 18 of FIGS. 1 and 2 is only schematically represented. As known in the art, one or more of the individual layers of the TBC undercoating 18 may have a strain-tolerant microstructure of columnar grains as a result of being deposited by a physical vapor deposition technique, such as EBPVD. Alternatively, one or more of the layers may have a noncolumnar structure as a result of being deposited by such methods as plasma spraying, including air plasma spraying (APS). Layers of this type are in the form of molten "splats," resulting in a microstructure characterized by irregular flattened grains and a degree of inhomogeneity and porosity, which features are deleterious to thermal protection properties of the undercoating 18.

After deposition of the TBC undercoating 18 and before application of a heat-absorbing topcoat 20, 120, the exposed surface of the thermal barrier coating 18 can be adjusted in order to provide a predetermined roughness of the exposed surface. Any known methods of measuring the roughness of the exposed surface may be utilized, and any known methods for polishing or roughening the exposed surface may be utilized to obtain a roughness that is about equal to the predetermined roughness. While the roughness may be adjusted to suit the particular type of TBC material, a preferred roughness is between about 80-125 microinches for a YSZ TBC. The exposed TBC undercoating 18 surface may further also be cleaned to remove debris and contaminants from the exposed surface, such as by application of acetone or other solvents, followed by drying or heating to remove any residual solvent before applying a heat-absorbing topcoat layer onto the exposed surface so as to overlie the thermal barrier coating and form a continuous overcoat on the thermal barrier coating.

The present invention provides several different approaches to depositing the heat-absorbing topcoat 20, 120 into the coating system of this invention. Contrary to expected results of adding a heat-absorbing material to a component designed to shed heat by convective transfer, it has been unexpectedly determined that the deposition of a heat-absorbing topcoat 20, 120 over a TBC undercoat 18 reduces the thermal transparency of the TBC undercoat 18 by absorbing heat and preventing its direct transmission to the TBC undercoating 18 , thus subjecting the component substrate 14 to less heat radiation than a TBC without the heat-absorbing topcoat 20, 120. These effects significantly reduce the heat load on the substrate 14 such that an established active air cooling flow can produce a relatively low substrate temperature in a high-heat environment such as the flowpath of a gas turbine engine. In many applications of interest, such as combustor liners, exhaust nozzle liners, and other turbine engine flowpath parts, design of the hardware and cooling flow is intended to reduce the surface temperature (in this case of the heat-absorbing layer 20, 120) significantly below, for example, the flame temperature in a combustor. For example, when the topcoat 20, 120 is applied over a TBC-coated turbine blade having cooling holes therein, the cooling holes act in a synergistic manner to produce a cooling airflow across the topcoat 20, 120, allowing the topcoat 20, 120 to convectively shed absorbed heat.

The present invention provides compositions and structures for overcoating of a substrate 14 having a TBC undercoating 18 deposited thereon. The overcoating, here a topcoat 20, 120, reduces the thermal conductivity of the coating system 10, 110 by including at least one heat-absorbent material. Exemplary topcoat 20, 120 component materials may comprise alumina, hafnia, tantala, silica, platinum, nickel, iron, cobalt, chromium oxide, rare earth oxides, silicides, carbides, and any combination thereof. The topcoat 20, 120 may further comprise a metallic-ceramic coating matrix that is formed by the deposition, such as by spraying, of a liquid mixture of at least one metallic element and at least one a ceramic precursor binder, followed by heating to a degree sufficient to thermally convert the binder and partially oxidize at least a portion of the metallic element(s) so as to form a heat-absorbing ceramic-metallic matrix coating 20, 120.

For example, the topcoat precursor may comprise a liquid or semi-liquid mixture of cobalt, iron, chromium (as the metallic element) and a ceramic precursor binder component such as silicone, any metal organic compound that can be heated or reacted with catalytic agents to form metal-organic type plastic materials, including but not limited to alumoxanes such as methoxyethoxyacetate alumoxane or acetate alumoxane, plasticized titanium ethoxide or tantalum ethoxide, or other plasticizable metal organic compound, wherein after applying the topcoat precursor to the TBC undercoating 18, the topcoat 20, 120 is heat treated (such as by heat gun or operation of the turbine engine) to at least partially oxidize the cobalt, iron, and/or chromium to form cobalt, iron, and/or chromium oxides and wherein the silicone is converted by heating to form silicone dioxide in a metallic-ceramic matrix that forms a continuous topcoat 20, 120.

Alternatively, the topcoat can be applied over a TBC in the form of one or more thin film layers by methods such as, but not limited to, chemical vapor deposition ("CVD"), physical vapor deposition (PVD, plasma spray,) and sputtering. Again, where a ceramic precursor is included in the topcoat components, deposition of the topcoat components is followed by heating to thermally convert the ceramic precursor to yield a heat-absorbing ceramic-metallic matrix coating.

In any embodiment, preferably, immediately upon application and prior to thermal decomposition, the topcoat layer is comprised of at least 25 weight percent metallic element, and at least 25 weight percent of the ceramic precursor binder component.

Exemplary embodiments of the invention are represented in FIGS. 2 through 3. Each embodiment incorporates a topcoat layer 20, 120 over a TBC 10, 110. With reference to FIG. 2, the coating system 10 is shown as comprising a single undercoat layer 18 lying directly on the bond coat 12, although multiple layer TBC undercoat layers 18 can also be provided within the scope of the invention. A preferred composition for the TBC undercoat layer 18 is based on binary yttria-stabilized zirconia (YSZ), a particular notable example of which contains about 6 to about 8 weight percent yttria, with the balance zirconia. However, other zirconia-based ceramic materials could also be used with this invention, such as zirconia fully stabilized by yttria, nonstabilized zirconia, or zirconia partially or fully stabilized by ceria, magnesia, scandia and/or other oxides. According to one aspect of the invention, a particularly suitable material for the undercoat layer 18 is YSZ containing about 4 to about 8 weight percent yttria (4-8% YSZ).

According to a preferred aspect of the first embodiment of FIG. 2, the undercoat layer 18 is deposited directly over the bond coat 12 that lies on the substrate 14. The undercoat layer 18 has thickness that is sufficient to provide a suitable stress distribution within the coating system 10 to promote the mechanical integrity of the coating. A suitable thickness for this purpose is generally on the order of about 3 to about 30 mils (about 75 to about 750 micrometers), which is also believed to be sufficient to provide a physical barrier to a possible reaction between the bond coat 12 and any silica-containing layers applied over the undercoat 18. The topcoat 20 is applied over the undercoat layer 18 and is sufficiently thick to provide the desired level of heat absorption and thermal protection in combination with the undercoat layer 18. While coating thickness depends on the particular application, a suitable thickness for the topcoat 20 is also about 2 to about 30 mils (about 75 to about 750 micrometers. Preferably, the coating is between about 8 to about 12 mils thick.

In FIG. 3, the coating system 110 differs from the embodiment of FIG. 2 by including in the topcoat 120 a plurality of heat-absorbing topcoat layers. As in the previous embodiment, the TBC undercoating layer 18 lies directly on the bond coat 12. The first topcoat layer 122 lies directly on the undercoat layer 18. A preferred composition for the undercoating layer 18 is again based on YSZ, preferably 3-20% YSZ. In contrast to the embodiment of FIG. 2, the topcoat 120 is formed to include at least two thin layers 122 and 124 of heat-absorbing material. Each thin topcoat layer 122, 124 may have the same composition, though it is foreseeable that their compositions could differ. Each topcoat layer 122, 124 preferably has thicknesses of at least about 2 mils (about 50 micrometers) thickness, for a total thickness of as little 4 mils (about 125 micrometers) and as much as 50 (about 1250 micrometers) are foreseeable. In the embodiment of FIG. 3, the combined thickness of the layers 122, 124 preferably constitutes at least about one-third of the combined thickness of the coating system 10 in order for the coating system 110 to have a significant impact on heat transparency/opacity.

Any number of TBC undercoat layers 18 and topcoat layers 20, 122 and 124 can be combined. However, the topcoat layers 20, 122 and 124 are preferably arranged so that the layer 20, 122 contacting the TBC undercoating 18 provides the highest level of mechanical adhesion to the bond coat 12. Additionally, in the embodiment of FIG. 3, the outer topcoat layer 124 should be sufficiently thick to provide erosion protection to the TBC undercoat layer 18 and any intermediate thin layer 122 or layers. A suitable thickness for this purpose is generally on the order of up to about 8-10 mils (about 250 micrometers).

In view of the above, it can be appreciated that each of the TBC systems 10, 110 of this invention employs a TBC undercoat 18 whose thermal conductivity and heat transparency is reduced by the addition of a topcoat 20, 120 having a higher heat absorption capacity than YSZ and other conventional TBC materials.

## Claims

1. A superalloy component comprising:
a superalloy substrate (14);
an alumina-containing bond coat layer (12) on the substrate (14);
an adherent layer of ceramic material forming a thermal barrier coating (18) on the alumina-containing bond coat layer (12); and
a heat-absorbing topcoat layer (20, 120) applied to the thermal barrier coating (18), the heat-absorbing topcoat layer (20, 120) comprised of the thermal decomposition product of a mixture comprised of at least one metallic element and at least one ceramic precursor binder component.

2. An article according to claim 1, wherein the topcoat layer (20, 120) has a thickness of between about 2 to about 30 mils.

3. An article according to claim 2, wherein the topcoat layer (20, 120) has a thickness of between about 8 to about 12 mils.

4. An article according to claim 1, wherein the at least one metallic element is selected from the group consisting of alumina, hafnia, tantala, silica, platinum, nickel, iron, cobalt, chromium oxide, and rare earth oxides

5. An article according to claim 1, wherein the at least one ceramic precursor binder component is selected from the group consisting of silicone, alumoxanes, plasticized titanium ethoxide or tantalum ethoxide, and other plasticizable metal organic compounds.

6. An article according to claim 1, wherein upon application and prior to thermal decomposition the topcoat layer (20, 120) is comprised of at least 25 weight percent metallic element, and at least 25 weight percent of the ceramic precursor binder.

7. An article according to claim 1, wherein the adherent layer of ceramic material (18) is comprised of between about 3% to about 20% yttrium-stabilized zirconia (YSZ).

8. An article according to claim 1, wherein the topcoat layer (20, 120) is applied by spraying a mixture of the metallic element and the ceramic precursor binder onto the thermal barrier coating (18) followed by heating of the deposited mixture to thermally convert the binder and to oxidize at least a portion of the metallic element to form a continuous topcoat layer (20, 120).

9. An article according to claim 1, wherein the topcoat layer (20, 120) further comprises at least two thin layers (122, 124) of heat-absorbing material.

10. An article according to claim 9, wherein each thin layer (122, 124) is comprised of a different metallic element.
